# EUROPÄISCHE PATENTSCHRIFT

(11) **EP 3 627 114 B1**
(45) Veröffentlichungstag und Bekanntmachung des Hinweises auf die Patenterteilung: **15.11.2023**
(21) Anmeldenummer: 19191568.5
(22) Anmeldetag: 13.08.2019
(51) Int. Cl.: G01F 1/325, G01R 23/16, G01F 1/60, G01F 1/84

(54) **VERFAHREN ZUR VERIFIZIERUNG EINES NUTZSIGNALANTEILS EINES PERIODISCHEN SENSORSIGNALS**
METHOD FOR VERIFYING A WANTED SIGNAL COMPONENT OF A PERIODIC SENSOR SIGNAL
PROCÉDÉ DE VÉRIFICATION D'UNE PARTIE DE SIGNAL UTILE D'UN SIGNAL DE CAPTEUR PÉRIODIQUE

(30) Priorität: 03.09.2018 DE 102018121449
(43) Veröffentlichungstag der Anmeldung: 25.03.2020
(73) Patentinhaber: Krohne Messtechnik GmbH, 47058 Duisburg (DE)
(72) Erfinder: Baloniak, Tim, 44625 Herne (DE)
(74) Vertreter: Gesthuysen Patentanwälte

(56) Entgegenhaltungen:
- EP-A1- 1 092 959
- DE-B4-112007 003 712
- US-A1- 2004 024 568
- US-A1- 2013 317 379

## Beschreibung

Die Erfindung betrifft ein Verfahren zur Verifizierung eines Nutzsignalanteils eines periodischen Sensorsignals eines Durchflussmessgerätes, wobei der Nutzsignalanteil des Sensorsignals zur Bestimmung eines Durchflussmesswertes eines strömenden Mediums dient.

Aus dem Stand der Technik sind eine Mehrzahl von Durchflussmessgeräten bekannt, die auf der Grundlage verschiedener Wirkprinzipien einen Wert für den Durchfluss eines strömenden Mediums bestimmen. Allen Durchflussmessgeräten ist gemein, dass mit einem Sensor eine Messgröße aufgenommen wird und vom Sensor entsprechende Sensorsignale ausgegeben werden.

Eine Vortex-Durchflussmessung, wie beispielsweise in der EP 1 092 959 A1 offenbart, basiert auf einer Frequenzmessung. In das strömende Medium wird ein Störkörper eingebracht und die Frequenz der sich ablösenden Vortizes bestimmt. Ein Drucksensor nimmt hierzu die Druckschwankungen (Messgröße) bedingt durch sich an dem Störkörper ablösende Wirbel auf. Das von dem Drucksensor ausgegebene Sensorsignal wird einer Frequenzauswertung unterzogen. Andere periodische Sensorsignale gibt es beispielsweise auch bei magnetisch-induktiven Durchflussmessgeräten (bei entsprechend periodischer Anregung) und bei Coriolis-Massedurchflussmessgeräten.

Neben dem eigentlich interessierenden Nutzsignal treten in realen Systemen immer auch Störsignale auf, die ebenfalls periodischer Natur sein können. Das von dem Sensor ausgegebene Sensorsignal weist also Nutzsignalanteile und Störsignalanteile auf. Bei einer Vortex-Durchflussmessung können solche Störsignale beispielsweise von Vibrationen des Messgerätes, insbesondere von Vibrationen von Pumpen oder Ventilen herrühren. Störsignale können aber auch beispielsweise durch Gasblasen in einem strömenden flüssigen Medium bedingt sein. Die Störsignale können dazu führen, dass die Durchflussmessungen beeinflusst werden und der bestimmte Durchflussmesswert verfälscht ist. Beispielsweise kann ein sehr starkes Störsignal fälschlicherweise als Nutzsignal angenommen und der Bestimmung eines Durchflussmesswertes zugrunde gelegt werden.

Der Erfindung liegt demnach die Aufgabe zugrunde, ein Verfahren bereitzustellen, mit der auf zuverlässige Art und Weise ein Nutzsignal von einem Störsignal unterschieden werden kann.

Die Aufgabe ist erfindungsgemäß zunächst und im Wesentlichen durch das Verfahren gemäß Patentanspruch 1 gelöst.

Das erfindungsgemäße Verfahren zeichnet sich dadurch aus, dass zunächst in einem Erfassungsschritt eine Messgröße über einen Zeitraum t₁ erfasst wird und ein periodisches Sensorsignal ausgegeben wird. Der Zeitraum t₁ ist bevorzugt so zu wählen, dass mehrere Perioden des Sensorsignals ausgegeben werden. Je mehr Perioden des Sensorsignals ausgegeben werden, desto zuverlässiger ist das Ergebnis des Verfahrens. Der Zeitraum t₁ kann in einer Ausführungsform von einem Benutzer gewählt werden, wobei der Benutzer insbesondere auf Erfahrungswerte über die Zeitdauer einer Signalperiode für die Bestimmung des Zeitraums t₁ zurückgreifen kann.

In einem auf den Erfassungsschritt folgenden Analyseschritt wird das Sensorsignal einer Zeit-/Frequenzanalyse unterzogen und ein zeitabhängiges Frequenzspektrum des Sensorsignals ermittelt.

Um nicht nur Informationen über die Frequenzanteile des Signals zu einem einzigen Zeitpunkt zu bekommen, wird bei dem erfindungsgemäßen Verfahren die Zusammensetzung des Sensorsignals aus einzelnen Frequenzen im zeitlichen Verlauf ermittelt. Wenn im Sinne der vorliegenden Anmeldung also von einem zeitabhängigen Frequenzspektrum die Rede ist, dann ist damit gemeint, dass zu mehreren Zeitpunkten das Amplitudenspektrum des Signals ermittelt wird.

In einer bevorzugten Ausgestaltung wird das zeitabhängige Frequenzspektrum des Sensorsignals in Form eines Spektrogramms oder eines Skalogramms ausgegeben. Das Spektrogramm bzw. Skalogramm dient der bildlichen Darstellung eines zeitabhängigen Frequenzspektrums eines Signals. Um sowohl die Frequenz als auch die Amplitude eines Signals über die Zeit darstellen zu können, wird in der Regel bei Spektrogrammen bzw. Skalogrammen die Frequenz des Signals über die Zeit aufgetragen, wobei die Amplitude durch Farbkodierung des aufgetragenen Signals dargestellt wird.

Erfindungsgemäß ist erkannt worden, dass periodische Nutzsignale eines Messgerätes charakteristische Merkmale aufweisen, anhand derer sie eindeutig als Nutzsignal identifiziert und somit von einem Störsignal unterschieden werden können. Demnach sieht das erfindungsgemäße Verfahren weiter vor, dass in einem Untersuchungsschritt das zeitabhängige Frequenzspektrum auf ein für das Nutzsignal charakteristisches Merkmal hin untersucht wird.

In einer Ausführungsform wird das zeitabhängige Frequenzspektrum auf mehrere voneinander verschiedene charakteristische Merkmale hin untersucht. Dieser Ausführungsform liegt die Erkenntnis zugrunde, dass ein Nutzsignal mehrere charakteristische Merkmale gleichzeitig aufweisen kann. Wird das Frequenzspektrum auf mehrere dieser charakteristischen Merkmale hin untersucht, kann die Zuverlässigkeit des erfindungsgemäßen Verfahrens erhöht werden.

Im Falle des Auffindens des erwarteten charakteristischen Merkmals wird gemäß der Erfindung in einem Verifizierungsschritt der die charakteristischen Merkmale aufweisende Anteil des Sensorsignals als Nutzsignalanteil verifiziert. Anschließend wird ein Durchflussmesswert auf der Grundlage des als Nutzignalanteil verifizierten Anteils des Sensorsignals ermittelt. Durch das erfindungsgemäße Verfahren wird ermöglicht, Nutzsignale anhand von zeitabhängigen Effekten zu identifizieren, die aufgrund der zeitabhängigen Frequenzspektren für die Analyse zugänglich gemacht werden.

Für die Ermittlung des Durchflussmesswertes muss nicht der gesamte Nutzsignalanteil zugrunde gelegt werden, insbesondere kann die Ermittlung des Durchflussmesswertes auf der Grundlage eines Teils des Nutzsignals erfolgen. Bei der Bestimmung des Durchflussmesswertes mit Hilfe eines Vortex-Durchflussmessgerätes kann insbesondere die Frequenz des Amplitudenpeaks des Nutzsignals mit maximaler Amplitude zugrunde gelegt werden.

Im Falle des Nicht-Auffindens des erwarteten charakteristischen Merkmals wird gemäß der Erfindung in einem Verwerfungsschritt der das charakteristische Merkmal nicht aufweisende Anteil des Sensorsignals als Störsignalanteil verworfen.

In einer Ausführungsform, in der das Frequenzspektrum auf mehrere charakteristische Merkmale hin untersucht wird, wird ein Anteil des Sensorsignals bereits dann als Nutzsignalanteil verifiziert, wenn er nur eins der erwarteten charakteristischen Merkmale aufweist. Bei dieser Ausführungsform ist also nicht vorgesehen, dass sämtliche erwarteten charakteristischen Merkmale auch tatsächlich auffindbar sein müssen, vielmehr reicht bereits das Auffinden nur eines erwarteten charakteristischen Merkmals.

Eine alternative Ausführungsform des erfindungsgemäßen Verfahrens sieht vor, dass sämtliche erwarteten charakteristischen Merkmale aufgefunden werden müssen, bevor ein Anteil des Sensorsignals als Nutzsignalanteil verifiziert wird. Ist nur eines der erwarteten charakteristischen Merkmale nicht auffindbar, so wird der entsprechende Anteil des Sensorsignals als Störsignalanteil verworfen.

Eine weitere Ausführungsform des erfindungsgemäßen Verfahrens sieht vor, dass ein Benutzer die Anzahl der charakteristischen Merkmale auswählen kann, die aufgefunden werden müssen, damit ein Anteil eines Sensorsignals als Nutzsignalanteil verifiziert wird.

In einer weiteren Ausführungsform des erfindungsgemäßen Verfahrens ist vorgesehen, dass ein Benutzer die Art des aufzufindenden charakteristischen Merkmals auswählen kann, anhand dessen ein Anteil des Sensorsignals als Nutzsignal verifiziert wird.

Der Analyseschritt kann bei dem erfindungsgemäßen Verfahren auf verschiedene Art und Weise realisiert werden. Eine besonders bevorzugte Ausführungsform sieht vor, dass die Zeit-/Frequenzanalyse mittels einer Kurzzeit-Fourier-Transformation durchgeführt wird. In einer Variante wird die Zeit-/Frequenzanalyse mittels einer Gabor-Transformation durchgeführt. Eine Gabor-Transformation stellt eine spezielle Kurzzeit-Fourier-Transformation dar, bei der eine Gauß-Funktion als Fensterfunktion verwendet wird. Liegt eine Kurzzeit-Fourier-Transformation, also insbesondere auch eine Gabor-Transformation zugrunde, so spricht man im Zusammenhang mit der bildlichen Darstellung des Signals von einem Spektrogramm.

In einer alternativen Ausführungsform des erfindungsgemäßen Verfahrens wird die Zeit-/Frequenzanalyse mittels einer Wavelet-Transformation durchgeführt. Bei einer Wavelet-Transformation werden zeitlich lokalisierte Funktionen als Basis genutzt, insbesondere zeitlich lokalisierte Wellenfunktionen. Liegt eine Wavelet-Transformation zugrunde, so spricht man im Zusammenhang mit der bildlichen Darstellung des Signals von einem Skalogramm.

In einer weiteren alternativen Ausführungsform des erfindungsgemäßen Verfahrens wird die Zeit-/Frequenzanalyse mittels einer Hilbert-Huang-Transformation durchgeführt. Vorteilhaft bei dieser Ausführungsform ist die geringe Zeit-/Frequenz-Unschärfe der Transformation.

Um ein charakteristisches Merkmal sinnvoll erkennen zu können, muss es im Fehlerfreizustand zunächst genau analysiert werden. In einer bevorzugten Ausführungsform des erfindungsgemäßen Verfahrens ist vorgesehen, dass als charakteristisches Merkmal ein vorgegebener Wert für das Verhältnis der Amplituden eines Signalanteils einer Grundfrequenz und eines Signalanteils einer höheren Ordnung im Frequenzspektrum gewählt wird. Zusätzlich oder alternativ dazu kann ebenfalls ein Wert für das Verhältnis der Amplituden zweier Signalanteile höherer Ordnungen gewählt werden. Um den Wert für das Amplitudenverhältnis oder die Amplitudenverhältnisse vorgeben zu können, muss dieser Wert also im Fehlerfreizustand zunächst bestimmt werden. Entspricht das Amplitudenverhältnis während einer Durchflussmessung dann dem vorgegebenen Wert, wird der entsprechende Sensorsignalanteil als Nutzsignalanteil verifiziert.

In einer bevorzugten Ausführungsform des erfindungsgemäßen Verfahrens wird als charakteristisches Merkmal eine vorgegebene Amplitudenmodulation und/oder eine vorgegebene Frequenzmodulation eines Signalanteils gewählt. In einer ersten Variante wird ein Signalanteil also als Nutzsignal verifiziert, wenn er auf vorgegebene Weise amplitudenmoduliert ist. In einer zweiten Variante wird ein Signalanteil als Nutzsignal verifiziert, wenn er auf vorgegebene Weise frequenzmoduliert ist. In einer dritten Variante werden die beiden charakteristischen Merkmale miteinander verknüpft und ein Signalanteil wird dann als Nutzsignal verifiziert, wenn er sowohl auf vorgegebene Weise amplitudenmoduliert als auch auf vorgegebene Weise frequenzmoduliert ist.

Weist das zeitabhängige Frequenzspektrum Signalanteile höherer Ordnungen auf, kann die Amplituden- und/oder Frequenzmodulation zusätzlich oder ausschließlich bei Signalanteilen höherer Ordnungen auftreten.

In einer weiteren Ausführungsform wird als charakteristisches Merkmal das Auftreten von Jitter im zeitabhängigen Frequenzspektrum, insbesondere im Spektrogramm oder Skalogramm, gewählt. Ist im Frequenzspektrum also Jitter aufzufinden, so wird der entsprechende Sensorsignalanteil als Nutzsignalanteil verifiziert. Unter Jitter ist eine Abweichung von der Periodizität eines grundsätzlich periodischen Signals zu verstehen. Bei einem Vortex-Durchflussmessgerät ist unter Jitter beispielsweise eine zeitliche Varianz zwischen den einzelnen Wirbelablösungen zu verstehen. In einem Frequenzspektrum macht sich Jitter demnach durch eine Verbreiterung der einzelnen Amplitudenpeaks bemerkbar.

Um im Frequenzspektrum zuverlässig charakteristische Merkmale identifizieren zu können, zeichnet sich das erfindungsgemäße Verfahren dadurch aus, dass in einem Teilbereichauswahlschritt ein Teilbereich des zeitlichen Frequenzspektrums ausgewählt wird und dass dieser Teilbereich in einem Teilbereichsanalyseschritt einer weiteren Zeit-/Frequenzanalyse unterzogen wird. Ein Teilbereich kann hier durch einen Benutzer ausgewählt werden. Ebenfalls kann ein Teilbereich anhand von vorgegebenen Kriterien ausgewählt werden, beispielsweise derart, dass ein vorgegebener Amplitudenwert eines Signalanteils im Spektrum aufgefunden wird und dann der Bereich um den entsprechenden Signalanteil als Teilbereich ausgewählt wird, in dem der Amplitudenwert auf einen vorgegebenen Prozentsatz des vorgegebenen Amplitudenwertes abfällt.

In einer bevorzugten Ausführungsform wird der Teilbereich einer weiteren Gabor-Transformation oder einer weiteren Wavelet-Transformation unterzogen. Die Wahl der Transformation kann in Abhängigkeit von der im Analyseschritt verwendeten Transformation erfolgen. In einer Ausführungsform ist demnach vorgesehen, dass die gleiche Transformation durchgeführt wird, wie im Analyseschritt. In einer anderen Ausführungsform wird eine von der im Analyseschritt durchgeführten Transformation verschiedene Transformation durchgeführt.

Eine besonders bevorzugte Ausführungsform des erfindungsgemäßen Verfahrens eignet sich nicht nur zum Verifizieren eines Nutzsignalanteils eines periodischen Sensorsignals. Vielmehr ermöglicht die besonders bevorzugte Ausführungsform eine Langzeitdiagnose und damit insbesondere das Erkennen von Veränderungen im Nutzsignalanteil. Die besonders bevorzugte Ausführungsform zeichnet sich dadurch aus, dass das Verfahren mehrmals zeitlich hintereinander durchgeführt wird, wobei nach jedem Verfahrensdurchlauf Informationen über den verifizierten Nutzsignalanteil gespeichert werden. Die gespeicherten Informationen können beispielsweise die ermittelten Durchflusswerte sein, oder können Informationen über das oder die aufgefundenen charakteristischen Merkmale sein, also beispielsweise ein Wert für ein Amplitudenverhältnis zweier Peaks im Frequenzspektrum. Nach jedem Verfahrensdurchlauf wird ein aktuell verifizierter Nutzsignalanteil mit dem Nutzsignalanteil des vorhergehenden Verfahrensdurchlaufs verglichen. Verglichen werden können insbesondere die jeweils abgespeicherten Informationen. Im Fall eines Abweichens der Nutzsignalanteile voneinander über einen vorgegebenen Toleranzbereich hinaus wird eine Meldung ausgegeben. Das Ausgeben der Meldung kann auf verschiedene Art und Weise erfolgen, nämlich beispielsweise durch die Ausgabe eines optischen oder eines akustischen Signals. Ebenfalls kann eine Meldung durch ein internes Speichern der Meldung ausgegeben werden.

In einer Ausführungsform werden die einzelnen Verfahrensdurchläufe kontinuierlich hintereinander durchgeführt. In einer anderen Ausführungsform werden die einzelnen Verfahrensdurchläufe im Abstand einer vorgegebenen Wartezeit T durchgeführt. Die Wartezeit T kann hier zwischen den einzelnen Verfahrensdurchläufen konstant sein oder variieren und insbesondere von einem Benutzer gewählt werden.

Im Einzelnen gibt es nun verschiedene Möglichkeiten, das erfindungsgemäße Verfahren zur Verifizierung eines Nutzsignalanteils eines periodischen Sensorsignals auszugestalten und weiterzubilden. Hierzu wird verwiesen auf die dem Patentanspruch 1 nachgeordneten Patentansprüche sowie die Beschreibung bevorzugter Ausführungsformen in Verbindung mit der Zeichnung. In der Zeichnung zeigt
- Fig. 1: ein Blockdiagramm einer ersten Ausführungsform des erfindungsgemäßen Verfahrens,
- Fig. 2: ein Detail des Blockdiagramms der ersten Ausführungsform zum Auffinden charakteristischer Merkmale in einem Spektrum,
- Fig. 3: ein Blockdiagramm einer zweiten Ausführungsform des erfindungsgemäßen Verfahrens,
- Fig. 4a: eine schematische Darstellung eines reinen Nutzsignals,
- Fig. 4b: eine schematische Darstellung eines Sensorsignals mit einem Nutzsignalanteil und einem Störsignalanteil,
- Fig. 5: ein Spektrogramm eines zeitlich in Frequenz und Amplitude stabilen Nutzsignals,
- Fig. 6: ein Spektrogramm eines amplitudenmodulierten Nutzsignals,
- Fig. 7: ein Spektrogramm eines frequenzmodulierten Nutzsignals,
- Fig. 8: ein Spektrogramm eines sowohl amplituden- als auch frequenzmodulierten Nutzsignals,
- Fig. 9: ein Spektrogramm eines Nutzsignals mit Harmonischen,
- Fig. 10: ein Spektrogramm eines Nutzsignals mit amplitudenmodulierten Harmonischen,
- Fig. 11: ein Spektrogramm eines Nutzsignals mit zeitlich begrenzt auftretenden Störsignalanteilen und
- Fig. 12: ein Spektrogramm eines Nutzsignals bei einem Durchflusspuls.

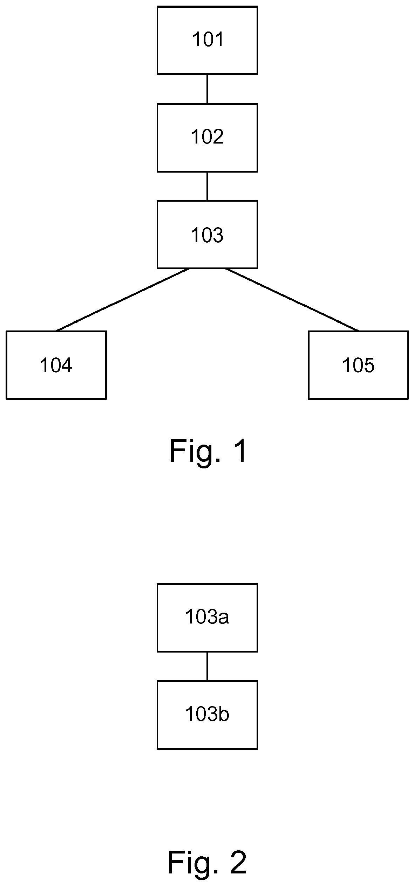

In Fig. 1 dargestellt ist ein Blockdiagramm einer ersten Ausführungsform des erfindungsgemäßen Verfahrens zur Verifizierung eines Nutzsignalanteils eines periodischen Sensorsignals eines Durchflussmessgerätes. In einem Erfassungsschritt 101 wird eine Messgröße von einem Sensor des Durchflussmessgerätes erfasst. Die Erfassung der Messgröße erfolgt über einen Zeitraum t₁, wobei der Zeitraum t₁ beispielsweise von einem Benutzer vorgegeben werden kann. Der Sensor gibt dann ein periodisches Sensorsignal aus. Das Sensorsignal weist einen Nutzsignalanteil und einen Störsignalanteil auf. In einem Analyseschritt 102 wird das Sensorsignal einer Zeit-/Frequenzanalyse unterzogen. Die Zeit-/Frequenzanalyse wird in der dargestellten Ausführungsform mittels einer Garbor-Transformation durchgeführt. Nicht dargestellt, aber ebenfalls von der Erfindung umfasst ist die Durchführung der Zeit-/Frequenzanalyse mit einer beliebigen anderen Transformation, wie beispielsweise einer Wavelet-Transformation. Nach der Zeit-/Frequenzanalyse wird ein zeitabhängiges Frequenzspektrum des Sensorsignals ermittelt. In einem Untersuchungsschritt 103 wird das Frequenzspektrum auf ein oder mehrere für das Nutzsignal charakteristisches Merkmal oder charakteristischen Merkmale hin untersucht. Im Fall des Auffindens eines erwarteten charakteristischen Merkmals oder mehrerer erwarteter charakteristischer Merkmale wird in einem Verifizierungsschritt 104 der die charakteristischen Merkmale aufweisende Anteil des Sensorsignals als Nutzsignalanteil verifiziert. Eine Bestimmung des Durchflussmesswertes kann dann auf der Grundlage dieses als Nutzsignalanteil verifizierten Anteils des Sensorsignals erfolgen. Wird das erwartete charakteristische Merkmal, oder werden die erwarteten charakteristischen Merkmale im Spektrum nicht aufgefunden, so wird in einem Verwerfungsschritt 105 der entsprechende Sensorsignalanteil als Störsignalanteil verworfen.

Fig. 2 zeigt ein Detail des Blockdiagramms der ersten Ausführungsform zum Auffinden charakteristischer Signale in dem Frequenzspektrum, zeigt also ein Detail des Untersuchungsschritts 103. Zum Auffinden erwarteter charakteristischer Merkmale wird in einem Teibereichauswahlschritt 103a ein Teilbereich des zeitabhängigen Frequenzspektrums ausgesucht, der genauer untersucht werden soll. Die Wahl des Teilbereiches kann hierbei von einem Benutzer durchgeführt werden. In einem Teilbereichsanalyseschritt 103b wird der ausgewählte Teilbereich einer weiteren Zeit-/Frequenzanalyse unterzogen. Im dargestellten Beispiel wird die weitere Zeit-/Frequenzanalyse mittels einer Wavelet-Transformation durchgeführt.

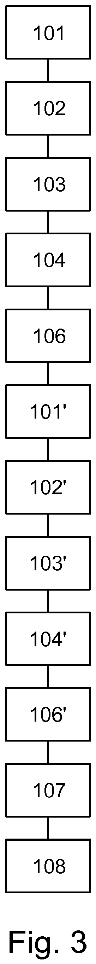

Fig. 3 zeigt ein Blockdiagramm einer weiteren bevorzugten Ausführungsform des Verfahrens zur Verifizierung eines Nutzsignalanteils eines periodischen Sensorsignals. Die ersten Verfahrensschritte entsprechen hierbei den in Fig. 1 dargestellten Verfahrensschritten: in einem Erfassungsschritt 101 wird eine periodische Messgröße über einen Zeitraum t₁ erfasst und von einem Sensor ein periodisches Sensorsignal ausgegeben. In einem Analyseschritt wird das Sensorsignal 102 einer Zeit-/Frequenzanalyse unterzogen. Nach der Ermittlung eines zeitabhängigen Frequenzspektrums des Sensorsignals wird in einem Untersuchungsschritt 103 das ermittelte Frequenzspektrum auf ein für das Nutzsignal charakteristisches Merkmal hin untersucht. In einem Verifizierungsschritt 104 wird bei Auffinden des erwarteten charakteristischen Merkmals der das charakteristische Merkmal aufweisende Anteil des Sensorsignals als Nutzsignalanteil verifiziert und ein Durchflussmesswert auf der Grundlage des verifizierten Nutzsignalanteils ermittelt. In einem Informationsspeicherschritt 106 werden anschließend Informationen über den verifizierten Nutzsignalanteil gespeichert. Die Informationen können beispielsweise die charakteristischen Merkmale sein oder kann der auf Grundlage des verifizierten Nutzsignalanteils bestimmte Durchflussmesswert sein. Die in Fig. 3 dargestellte Ausführungsform des Verfahrens zeichnet sich nun dadurch aus, dass das bisher beschriebene Verfahren nochmals durchgeführt wird, dass also die Verfahrensschritte mehrmals zeitlich hintereinander durchgeführt werden. In einem zweiten Erfassungsschritt 101' wird also nun über einen weiteren Zeitraum t₂ eine Messgröße von einem Sensor erfasst und ein periodisches Sensorsignal ausgegeben. In einem zweiten Analyseschritt 102' wird das Sensorsignal einer Zeit-/Frequenzanalyse unterzogen und ein zeitabhängiges Frequenzspektrum des Sensorsignals ermittelt. In einem zweiten Untersuchungsschritt 103' wird das Frequenzspektrum auf ein charakteristisches Merkmal hin untersucht. Das charakteristische Merkmal entspricht hier dem bereits im ersten Verfahrensdurchlauf gesuchten charakteristischen Merkmal. Beim Auffinden des erwarteten charakteristischen Merkmals wird in einem zweiten Verifizierungsschritt 104' der das charakteristische Merkmal aufweisende Sensorsignalanteil als Nutzsignalanteil verifiziert und ein weiterer Durchflussmesswert auf der Grundlage des zweiten verifizierten Nutzsignalanteils ermittelt. In einem zweiten Informationsspeicherschritt 106' werden die gleichen Informationen betreffend den Nutzsignalanteil gespeichert, wie in dem ersten Verfahrensdurchlauf. In einem nun anschließenden Vergleichsschritt 107 wird der Nutzsignalanteil des zweiten Verfahrensdurchlaufs mit dem Nutzsignalanteil des ersten Verfahrensdurchlaufs verglichen. Der Vergleich erfolgt anhand der gespeicherten Informationen der jeweiligen Nutzsignalanteile. Bei einem Abweichen der Nutzsignalanteile voneinander über einen vorgegebenen Toleranzbereich hinaus wird in einem Meldeschritt 108 eine entsprechende Meldung ausgegeben. Die Ausführungsform des Verfahrens ermöglicht somit eine gute Möglichkeit einer Überwachung der Durchflussmessung. Insbesondere kann so eine Langzeitüberwachung realisiert werden, mit der Veränderungen am Durchflussmessgerät einfach erkannt werden können.

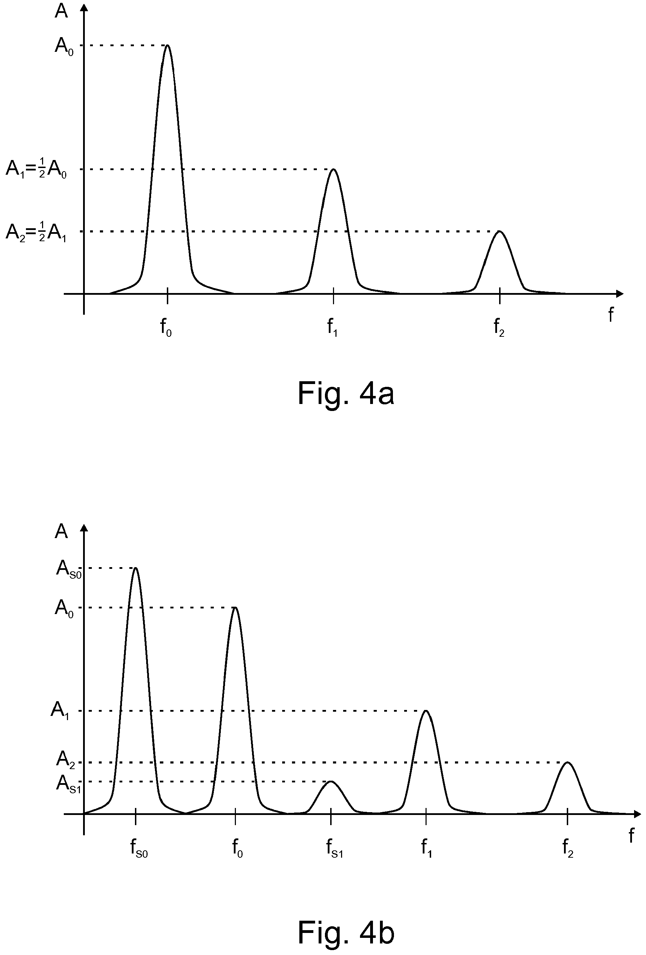

Fig. 4a zeigt ein Spektrum eines ungestörten Sensorsignals zu einer Zeit t, also eines Sensorsignals, das lediglich aus einem Nutzsignal besteht. Das Nutzsignal weist einen Amplitudenpeak bei einer Grundfrequen f₀ mit der Amplitude A₀, einen Amplitudenpeak erster Ordnung bei der Frequenz f₁ mit der Amplitude A₁ und einen Amplitudenpeak zweiter Ordnung bei der Frequenz f₂ mit der Amplitude A₂ auf. Charakteristisch für das dargestellte Nutzsignal ist, dass die Amplitude A₁ des Amplitudenpeaks erster Ordnung halb so groß ist, wie die Amplitude A₀ des Amplitudenpeaks bei der Grundfrequenz f₀ und dass die Amplitude A₂ des Amplitudenpeaks zweiter Ordnung halb so groß ist, wie die Amplitude A₁ des Amplitudenpeaks erster Ordnung und damit ein viertel so groß ist wie Amplitude A₀ des Amplitudenpeaks bei der Grundfrequenz f₀. Als charakteristisches Merkmal wird vorliegend gewählt, dass der Wert für das Verhältnis der Amplituden des Amplitudenpeaks der Ordnung O und des Amplitudenpeaks der Ordnung (O+1) einhalb beträgt.

Fig. 4b zeigt ein Spektrum zu einer Zeit t eines Sensorsignals, das neben einem Nutzsignalanteil ebenfalls einen Störsignalanteil aufweist. Der Nutzsignalanteil entspricht dem in Fig. 4a dargestellten Nutzsignal. Der Störsignalanteil besteht aus einem zusätzlichen Amplitudenpeak bei der Frequenz fₛ₀ mit der Amplitude Aₛ₀ und einem zusätzlichen Amplitudenpeak bei der Frequenz fₛ₁ mit der Amplitude Aₛ₁. Der Störsignalanteil lässt sich dadurch als Störsignalanteil identifizieren, dass das Amplitudenverhältnis Aₛ₁/Aₛ₀ der Amplitudenpeaks bei den Frequenzen fₛ₀ und fₛ₁ nicht den Wert einhalb beträgt und damit das charakteristische Merkmal nicht aufweist.

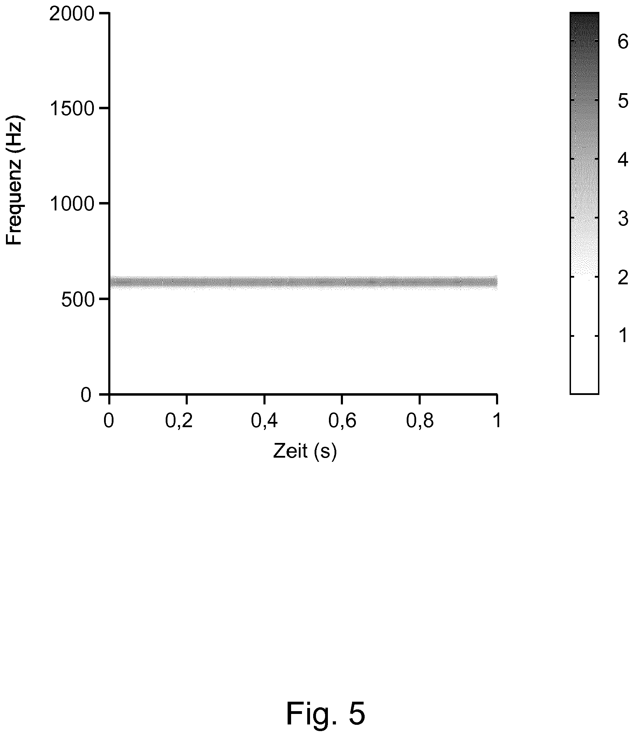

In den Fig. 5 bis 12 sind jeweils zeitabhängige Frequenzsspektren in Form von Spektrogrammen dargestellt, die jeweils Nutzsignale mit verschiedenen charakteristischen Merkmalen zeigen.

In den Fig. 5 bis 12 ist auf der x-Achse die Zeit t aufgetragen, auf der y-Achse die Frequenz f aufgetragen und farblich kodiert die Amplitude A aufgetragen. Die entsprechende Farbskala ist rechts des Spektrogramms dargestellt.

Fig. 5 zeigt ein zeitlich in Frequenz und Amplitude stabiles Nutzsignal ohne besondere charakteristische Merkmale.

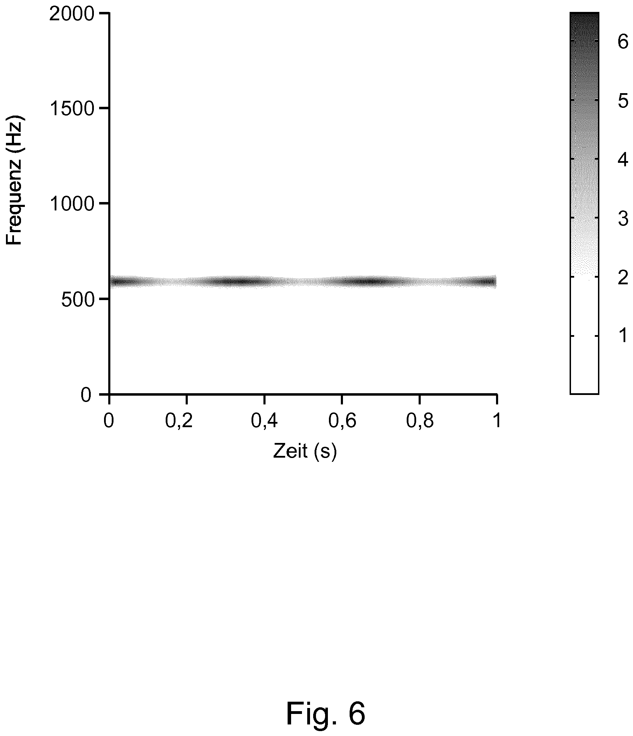

Damit ein Signal als Nutzsignal verifiziert wird, kann vorgesehen sein, dass das Signal genau ein charakteristisches Merkmal aufweist. Beispielsweise kann das eine bestimmte Amplitudenmodulation oder eine bestimmte Frequenzmodulation sein. Das in Fig. 6 dargestellte Nutzsignal weist eine Amplitudenmodulation auf, die der als charakterisitsches Merkmal definierten Amplitudenmodulation entspricht.

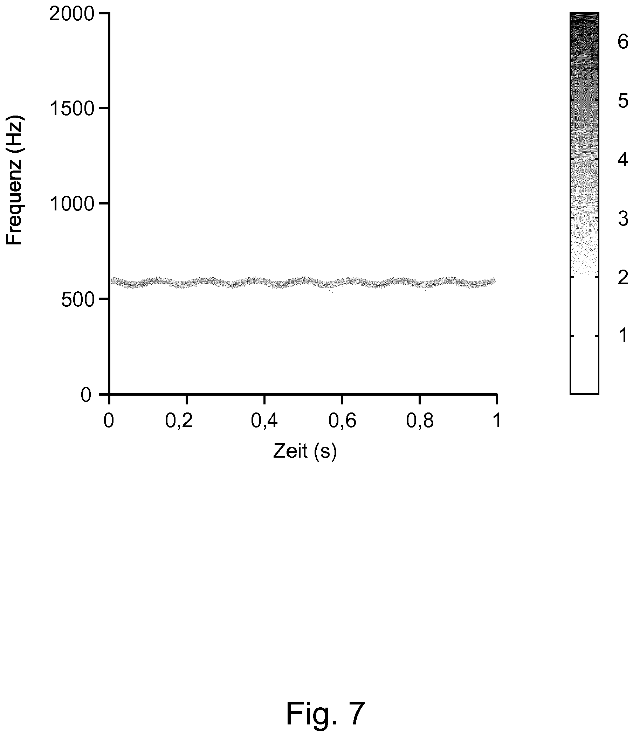

Das in Fig. 7 dargestellte Nutzsignal ist auf charakteristische Weise frequenzmoduliert. Weist ein Signal also die entsprechende Frequenzmodulation auf, so wird es als Nutzsignal verifiziert.

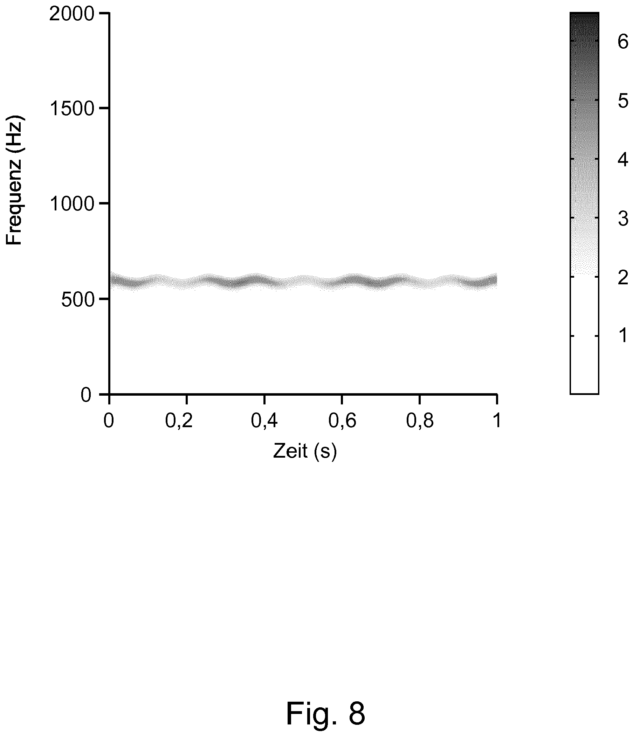

Damit ein Signal als Nutzsignal verifiziert wird, kann auch vorgesehen sein, dass es mehrere charakteristische Merkmale aufweist, beispielsweise sowohl auf bestimmte Art amplitudenmoduliert ist als auch auf bestimmte Art frequenzmoduliert ist. Weist das Signal nur eines der beiden charakterisitischen Merkmale auf, so wird es nicht als Nutzsignal verifiziert, sondern als Störsignal verworfen. Das in Fig. 8 dargestellte Nutzsignal weist zwei charakterisitische Merkmale auf: Zum einen weist es eine als charakteristisches Merkmal definierte Amplitudenmodulation auf, zum anderen weist es zudem eine ebenfalls als charakteristisches Merkmal definierte Frequenzmodulation auf.

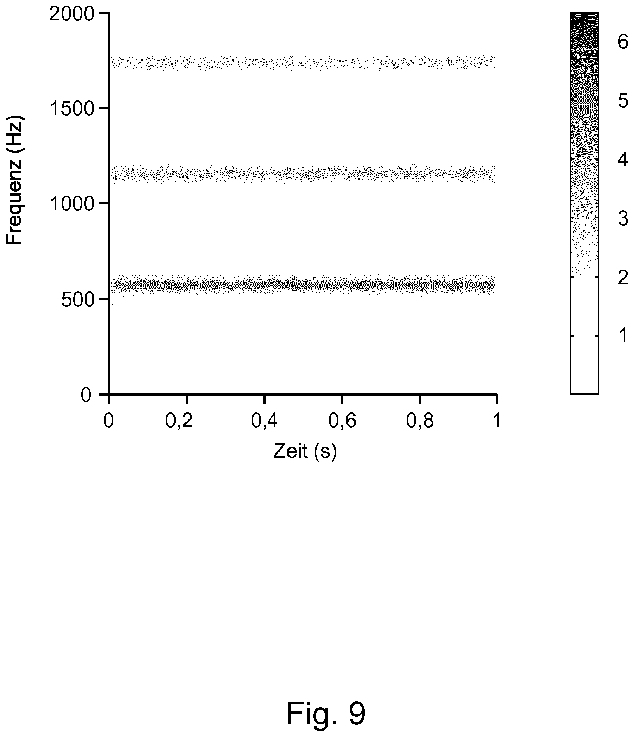

Fig. 9 zeigt ebenso wie Fig. 4a ein Nutzsignal mit einem Signalanteil bei einer Grundfrequen f₀ mit der Amplitude A₀, einem Signalanteil erster Ordnung bei der Frequenz f₁ mit der Amplitude A₁ und einem Signalanteil zweiter Ordnung bei der Frequenz f₂ mit der Amplitude A₂. im Gegensatz zu Fig. 4a ist jedoch nicht nur ein Zeitpunkt t dargestellt, sondern vielmehr das gesamte Spektrogramm mit dem zeitlichen Verlauf. Charakteristisch für das dargestellte Nutzsignal ist, dass die Amplitude A₁ des Amplitudenpeaks erster Ordnung in einem bestimmten Verhältnis zu der Amplitude A₀ des Amplitudenpeaks bei der Grundfrequenz f₀ steht und dass die Amplitude A₂ des Amplitudenpeaks zweiter Ordnung in einem bestimmten Verhältnis zu der Amplitude A₁ des Amplitudenpeaks erster Ordnung steht. Als charakteristisches Merkmal wird vorliegend ein bestimmter Wert für das Verhältnis der Amplituden des Amplitudenpeaks der Ordnung O und des Amplitudenpeaks der Ordnung (O+1) gewählt.

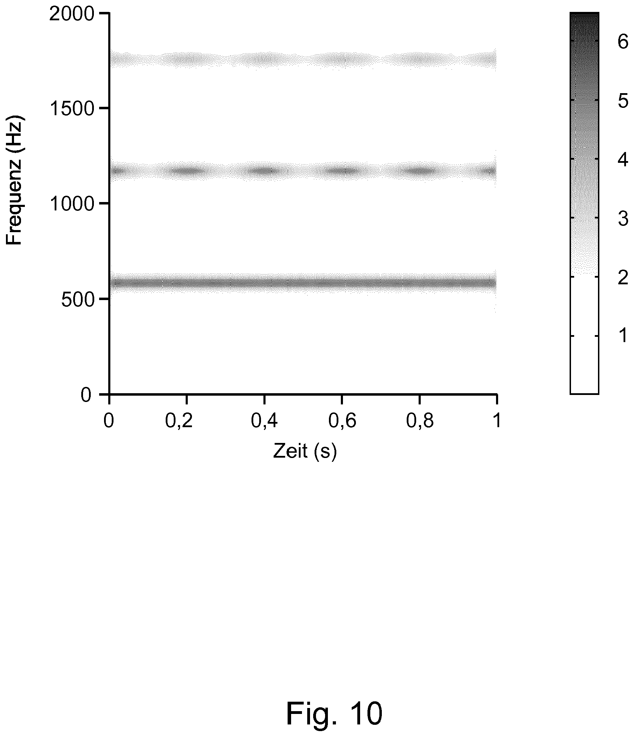

Das in Fig. 10 gezeigte Spektrogramm zeigt neben dem bereits in Fig. 9 dargestellten charakterisitischen Merkmal zudem das charakteristische Merkmal der Amplitudenmodulation der Harmonischen. Ein Signal wird also dann als Nutzsignal verifiziert, wenn es neben den vorgegebenen Amplitudenverhältnissen der Signalanteile der verschiedenen Ordnungen sowohl die charakteristische Amplitudenmodulation aufweist.

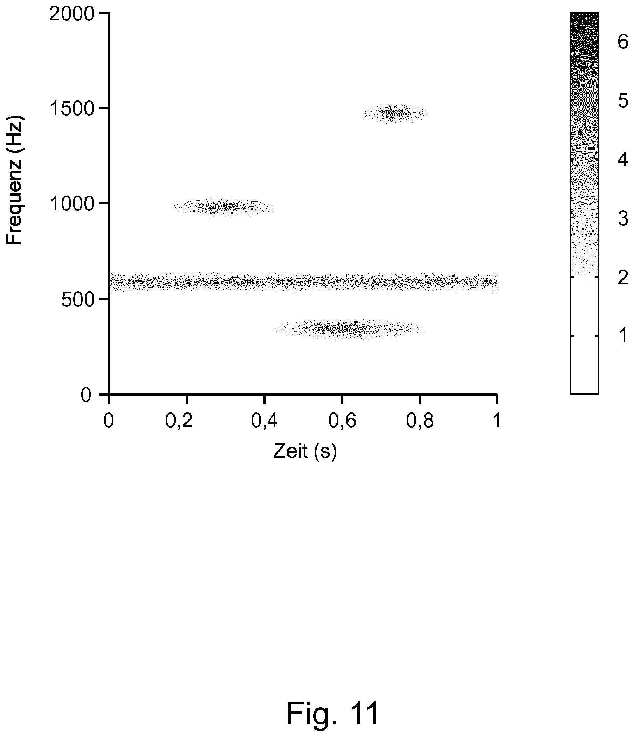

Fig. 11 zeigt das in Fig. 5 dargestellte Nutzsignal mit konstanter Amplitude und konstanter Frequenz, wobei bei dem in Fig. 11 dargestellten Spektrogramm zudem zeitlich begrenzte Störsignalanteile auftreten. Die zeitlich begrenzten Störsignale können beispielsweise dann, wenn dem Spektrogramm eine Vortex-Durchflussmessung zugrunde liegt, von in dem Medium auftretenden Gasblasen resultieren.

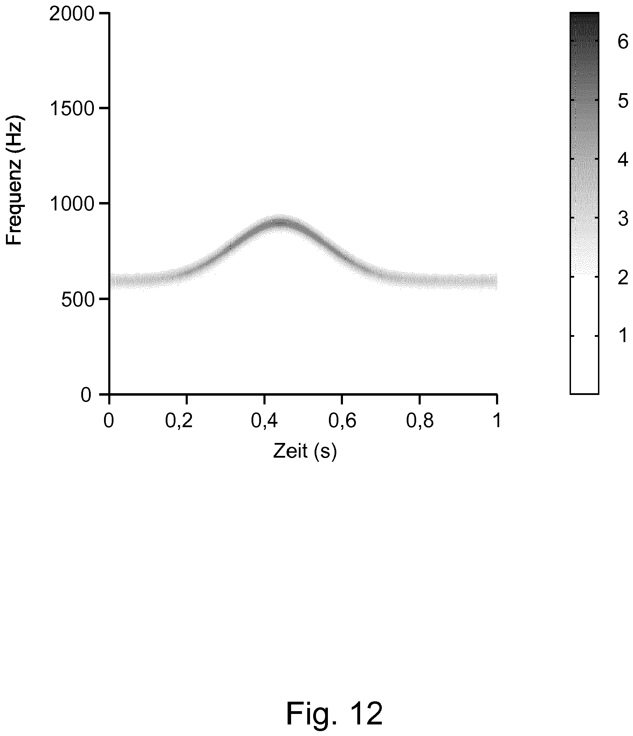

In Fig. 12 ist ein weiteres Spektrogramm dargestellt, das ein Nutzsignal bei einem Durchflusspuls zeigt. Bei dem dargestellten Nutzsignal sind Frequenz und Amplitude des Signals auf charakteristische Weise miteinander verknüpft.

### Bezugszeichen

- 101: Erfassungsschritt 1
- 101': Erfassungsschritt 2
- 102: Analyseschritt 1
- 102': Analyseschritt 2
- 103: Untersuchungsschritt 1
- 103': Untersuchungsschritt 2
- 103a: Teilbereichsauswahlschritt
- 103b: Teilbereichsanalyseschritt
- 104: Verifizierungsschritt 1
- 104': Verifizierungsschritt 2
- 105: Verwerfungsschritt 1
- 105': Verwerfungsschritt 2
- 106: Informationsspeicherschritt 1
- 106': Informationsspeicherschritt 2
- 107: Vergleichsschritt
- 108: Meldeschritt

## Patentansprüche

1. Verfahren zur Verifizierung eines periodischen Nutzsignalanteils eines Sensorsignals eines Durchflussmessgerätes, wobei der Nutzsignalanteil des Sensorsignals zur Bestimmung eines Durchflussmesswertes eines strömenden Mediums dient,
wobei in einem Erfassungsschritt (101) eine periodische Messgröße über einen Zeitraum t₁ erfasst wird und ein periodisches Sensorsignal ausgegeben wird,
wobei in einem Analyseschritt (102) das Sensorsignal einer Zeit-/Frequenzanalyse unterzogen wird und ein zeitabhängiges Frequenzspektrum des Sensorsignals ermittelt wird,
wobei in einem Untersuchungsschritt (103) das zeitabhängige Frequenzspektrum auf ein für das Nutzsignal charakteristisches Merkmal hin untersucht wird,
wobei im Falle des Auffindens des erwarteten charakteristischen Merkmals in dem zeitabhängigen Frequenzspektrum in einem Verifizierungsschritt (104) der das charakteristische Merkmal aufweisende Anteil des Sensorsignals als Nutzsignalanteil verifiziert wird und ein Durchflussmesswert auf der Grundlage des verifizierten Nutzsignalanteils ermittelt wird, und
wobei im Falle des Nicht-Auffindens des erwarteten charakteristischen Merkmals in dem zeitabhängigen Frequenzspektrum in einem Verwerfungsschritt (105) der das charakteristische Merkmal nicht aufweisende Anteil des Sensorsignals als Störsignalanteil verworfen wird
und wobei zur Identifizierung eines charakteristischen Merkmals in einem Teilbereichauswahlschritt (103a) ein Teilbereich des zeitabhängigen Frequenzspektrums ausgewählt wird und dass dieser Teilbereich in einem Teilbereichsanalyseschritt (103b) einer weiteren Zeit-/Frequenzanalyse unterzogen wird.

2. Verfahren nach Anspruch 1, **dadurch gekennzeichnet, dass** die Zeit-/Frequenzanalyse oder die weitere Zeit/Frequenzanalyse mittels einer Kurzzeit-Fourier-Transformation durchgeführt wird.

3. Verfahren nach Anspruch 1 oder 2, **dadurch gekennzeichnet, dass** die Zeit-/Frequenzanalyse oder die weitere Zeit/Frequenzanalyse mittels einer Wavelet-Transformation, einer Gabor-Transformation oder einer Hilbert-Huang-Transformation durchgeführt wird.

4. Verfahren nach einem der Ansprüche 1 bis 3, **dadurch gekennzeichnet, dass** als charakteristisches Merkmal eine vorgegebene Amplitudenmodulation und/oder eine vorgegebene Frequenzmodulation eines Signalanteils gewählt wird.

5. Verfahren nach einem der Ansprüche 1 bis 4, **dadurch gekennzeichnet, dass** als charakteristisches Merkmal ein vorgegebener Wert für das Verhältnis der Amplituden eines Signalanteils einer Grundfrequenz und eines Signalanteils einer höheren Ordnung im zeitabhängigen Frequenzspektrum gewählt wird und/oder ein Wert für das Verhältnis der Amplituden zweier Signalanteile höherer Ordnungen gewählt wird.

6. Verfahren nach einem der Ansprüche 1 bis 5, **dadurch gekennzeichnet, dass** als charakteristisches Merkmal das Auftreten von Jitter im zeitabhängigen Frequenzspektrum gewählt wird.

7. Verfahren nach einem der Ansprüche 1 bis 6, **dadurch gekennzeichnet, dass** das Verfahren wenigstens zweimal zeitlich hintereinander durchgeführt wird, wobei nach jedem Verfahrensdurchlauf Informationen über den als Nutzsignalanteil verifizierten Anteil des Sensorsignals gespeichert werden, und dass nach jedem Verfahrensdurchlauf ein aktuell verifizierter Nutzsignalanteil mit dem Nutzsignalanteil des vorhergehenden Verfahrensdurchlaufs verglichen wird, und dass im Fall eines Abweichens der Nutzsignalanteile über einen vorgegebenen Toleranzbereich hinaus voneinander eine Meldung ausgegeben wird.

## Claims

1. Method for verifying a periodic useful signal component of a sensor signal of a flowmeter, wherein the useful signal component of the sensor signal is used to determine a flow measurement value of a flowing medium,
wherein, in a detection step (101), a periodic measured variable is captured over a time period t1 and a periodic sensor signal is output,
wherein, in an analysis step (102), the sensor signal is subjected to a time-frequency analysis and a time-dependent frequency spectrum of the sensor signal is determined,
wherein, in an examination step (103), the time-dependent frequency spectrum is examined for a feature characteristic of the useful signal,
wherein, in the event of finding the expected characteristic feature in the time-dependent frequency spectrum, in a verification step (104), the component of the sensor signal having the characteristic feature is verified as a useful signal component and a flow measurement value is determined on the basis of the verified useful signal component, and
wherein, in the event that the expected characteristic feature is not found in the time-dependent frequency spectrum, the component of the sensor signal which does not have the characteristic feature is discarded as a noise signal component in a discarding step (105),
wherein, in order to identify a characteristic feature, a sub-range of the time-dependent frequency spectrum is selected in a sub-range selection step (103a), and that this sub-range is subjected to a further time-frequency analysis in a sub-range analysis step (103b).

2. Method according to claim 1, **characterized in that** the time-frequency analysis or the further time-frequency analysis is carried out by means of a short-time Fourier transform.

3. Method according to claim 1 or 2, **characterized in that** the time-frequency analysis or the further time-frequency analysis is carried out by means of a wavelet transform, a Gabor transform or a Hilbert-Huang transform.

4. Method according to any one of claims 1 to 3, **characterized in that** a predetermined amplitude modulation and/or a predetermined frequency modulation of a signal component is selected as a characteristic feature.

5. Method according to any one of claims 1 to 4, **characterized in that** a predetermined value for the ratio of the amplitudes of a signal component of a fundamental frequency and a signal component of a higher order in the time-dependent frequency spectrum is selected as a characteristic feature and/or a value for the ratio of the amplitudes of two signal components of higher orders is selected.

6. Method according to any one of claims 1 to 5, **characterized in that** the occurrence of jitter in the time-dependent frequency spectrum is selected as a characteristic feature.

7. Method according to any one of claims 1 to 6, **characterized in that** the method is carried out at least twice in succession, wherein information about the component of the sensor signal verified as a useful signal component is stored after each method cycle, and that after each method cycle a currently verified useful signal component is compared with the useful signal component of the preceding method cycle, and that, in the event of a deviation of the useful signal components from one another beyond a predefined tolerance range, a message is output.

## Revendications

1. Procédé de vérification d'une partie de signal utile périodique d'un signal de capteur d'un débitmètre, dans lequel la partie de signal utile du signal de capteur sert à déterminer une valeur de mesure de débit d'un milieu en écoulement,
dans lequel, lors d'une étape d'acquisition (101), une grandeur de mesure périodique est acquise pendant un intervalle de temps t₁ et un signal de capteur périodique est délivré,
dans lequel, lors d'une étape d'analyse (102), le signal de capteur est soumis à une analyse temps/fréquence et un spectre de fréquence dépendant du temps du signal de capteur est déterminé,
dans lequel, lors d'une étape d'examen (103), le spectre de fréquence dépendant du temps est examiné pour déterminer un élément caractéristique du signal utile,
dans lequel, dans le cas où l'élément caractéristique attendu est trouvé dans le spectre de fréquence dépendant du temps lors d'une étape de vérification (104), la partie du signal de capteur présentant l'élément caractéristique est vérifiée en tant que partie de signal utile et une valeur de mesure de débit est déterminée sur la base de la partie de signal utile vérifiée, et
dans lequel, dans le cas où l'élément caractéristique attendu n'est pas trouvé dans le spectre de fréquence dépendant du temps lors d'une étape de rejet (105), la partie du signal de capteur ne présentant pas l'élément caractéristique est rejetée en tant que partie de signal parasite et
dans lequel, pour identifier un élément caractéristique, lors d'une étape de sélection de plage partielle (103a), une plage partielle du spectre de fréquence dépendant du temps est sélectionnée et, lors d'une étape d'analyse de plage partielle (103b), cette plage partielle est soumise à une analyse temps/fréquence supplémentaire.

2. Procédé selon la revendication 1, **caractérisé en ce que** l'analyse temps/fréquence ou l'analyse temps/fréquence supplémentaire est effectuée au moyen d'une transformée de Fourier à court terme.

3. Procédé selon la revendication 1 ou 2, **caractérisé en ce que** l'analyse temps/fréquence ou l'analyse temps/fréquence supplémentaire est effectuée au moyen d'une transformée en ondelettes, d'une transformée de Gabor ou d'une transformée de Hilbert-Huang.

4. Procédé selon l'une des revendications 1 à 3, **caractérisé en ce qu'**en tant qu'élément caractéristique, une modulation d'amplitude prédéterminée et/ou une modulation de fréquence prédéterminée d'une partie de signal est sélectionnée.

5. Procédé selon l'une des revendications 1 à 4, **caractérisé en ce qu'**en tant qu'élément caractéristique, une valeur prédéfinie est sélectionnée pour le rapport des amplitudes d'une partie de signal d'une fréquence fondamentale et d'une partie de signal d'un ordre supérieur dans le spectre de fréquence dépendant du temps et/ou **en ce qu'**une valeur est sélectionnée pour le rapport des amplitudes de deux parties de signal d'ordres supérieurs.

6. Procédé selon l'une des revendications 1 à 5, **caractérisé en ce qu'**en tant qu'élément caractéristique, la survenue d'une gigue dans le spectre de fréquence dépendant du temps est sélectionnée.

7. Procédé selon l'une des revendications 1 à 6, **caractérisé en ce que** le procédé est exécuté au moins deux fois successivement dans le temps, des informations concernant la partie du signal de capteur vérifiée en tant que partie de signal utile étant mémorisées après chaque exécution du procédé, et **en ce que**, après chaque exécution du procédé, une partie de signal utile actuellement vérifiée est comparée à la partie de signal utile de l'exécution précédente du procédé et **en ce que**, en cas de d'écart entre les parties de signal utile au-delà d'une plage de tolérance prédéfinie, un message est délivré.
